# EUROPEAN PATENT SPECIFICATION

(11) **EP 2 360 481 B1**
(45) Date of publication and mention of the grant of the patent: **12.09.2018**
(21) Application number: 10154313.0
(22) Date of filing: 23.02.2010
(51) Int. Cl.: G01Q 20/02, G01Q 60/22

(54) **Near field optical microscope with optical imaging system**
Optisches Nahfeldmikroskop mit optischem Bildgebungssystem
Microscope optique de champ proche doté d'un système d'imagerie optique

(43) Date of publication of application: 24.08.2011
(73) Proprietor: Neaspec GmbH, 82152 Martinsried (DE)
(72) Inventor: Ocelic, Nenad, 82152 Martinsried (DE); Huth, Florian, 80687 München (DE)
(74) Representative: Schiener, Jens

(56) References cited:
- EP-A2- 0 880 043
- DE-A1-102006 002 461
- DE-A1-102008 003 291
- JP-A- 2002 340 771
- JP-A- 2007 003 246
- Yasushi Inouye ET AL: "Near-field scanning optical microscope with a metallic probe tip", Optics Letters, vol. 19, no. 3, 1 February 1994 (1994-02-01), page 159, XP55192712, ISSN: 0146-9592, DOI: 10.1364/OL.19.000159

## Description

The invention relates to a device for conducting near-field optical measurements of a specimen comprising at least two far-field optical imaging systems. Further the invention relates to the use of such a device and to a method for adjusting the probe or the illumination of the probe in such a device.

Optical near-field microscopy is based upon the measurement of scattered light at a near-field probe which is generated by optical near-field interaction between the near-field probe and a specimen. To achieve high local resolution known (near-field) probes comprising sharp tips are used, e.g. such tips as used in atomic force microscopy. The (near-field) probe is illuminated at its tip by focused light, e.g. in the visible or mid-infrared spectrum, to generate scattered light during tip-specimen interaction. The optical near-field is typically measured by scanning (scan-probing) the specimen. From the measurement of the scattered light material properties of the specimen can be obtained with a local resolution down to nanometer scale without diffraction limit.

One problem of known devices for the near-field optical measurement of a specimen using probes is that the probe or the different optical elements, respectively, have to be precisely aligned such that the illumination beam path or paths of the device is/are precisely focused onto the probe, in particular onto the tip of the probe. A slight misalignment already leads to significantly reduced intensity of the illumination at the tip of the probe, which is the area of interaction with the specimen. Further, misalignment typically leads to an increase in false signals as light scattered by other parts of the probe or of the probe holding structure may be collected leading to a lower signal to disturbances and noise ratio. Thus, precise alignment of all optical elements and the probe, respectively, is of significant importance for a scanning near-field optical microscope. The focused (illumination) light which is used to excite the near-field interaction needs to be adjusted to the tip apex as precisely as possible, such that the focal point preferably does not deviate from its optimal position by more than about one wavelength of the light used for exciting the near-field interaction.

Atomic force microscopes (AFMs) are known in the art, upon which most near-field optical microscopes are based. Some AFMs already contain a monitoring system for monitoring the sample, as well as the alignment and focusing of the laser, which detects the deflection of the cantilever to which the probing tip is attached. Such a monitoring system usually comprises a conventional microscope or a camera with optical elements, such as an objective. Due to its purpose, such monitoring system has its optical axis nearly perpendicular to the sample surface, or to the surface of the cantilever, respectively, and usually at least within an angle relative to the sample normal or the cantilever normal of less than 20° in order to ensure that the interesting area of the specimen or the cantilever, respectively, can be kept in focus. However, most commercially available AFM probes are built such that the probing tip itself is mounted under the cantilever, so that the probing tip is hidden below the cantilever when observed from a direction roughly perpendicular to the specimen or cantilever surface, i.e. from the cantilever "top" side. Typically widths of probe cantilevers are between 30 µm and 50 µm, and typically heights of probe tips are 15 µm to 30 µm. This results in an angle, relative to the cantilever surface between about 27° to 59° at which the tip apex just starts to be visible. As a consequence, also the exact point of sample/tip contact only becomes visible when imaged from the corresponding direction. Therefore, the monitoring system used for imaging the sample and/or the cantilever is generally unsuitable for aligning the probe and/or the focusing of the illuminating light for the purpose of performing near-field optical measurements, and is also unsuitable for monitoring the exact tip-sample contact point.

AFM probes are known, which are specifically constructed to provide visibility of the tip even when imaged from "top", i.e. from a direction nearly perpendicular to the top surface of the cantilever, such as Nanosensors AdvancedTEC™ probes. Such specifically constructed probes are more expensive than typical AFM probes, and also the number of their variants is limited, in particular in regard to metallization of the tip, spring constant of the cantilever, or sharpness of the tip. This renders these probes unsuitable for some specific applications and also cost intensive for general use.

Devices are known in the art, wherein an AFM is constructed on top of an inverted microscope. Such systems provide a view on the probe from below, i.e. from the "bottom" side, directly exposing the probing tip. Such systems cannot be used to align or focus the illuminating light when using an opaque specimen, nor can these systems be used to monitor the specimen or the tip/specimen contact point of opaque specimens.

Known methods to precisely align the probe or the illumination light are prone to irreproducibility and are time-consuming. In one method the diffraction of the light by the tip apex is utilized. This effect of diffraction can be visualized by placing an opaque screen below the tip while the tip is illuminated from the side. By this method, the proper alignment can only be estimated by the occurrence of certain diffraction patterns onto the screen, which pattern can differ from tip to tip, and hardly can be uniformly described. Further, this method requires a considerable amount of experience to be routinely conducted.
As an alternative method for alignment of the probe or illumination light a method is known which is based on forming a large 3D-scan of the light focusing element, typically a lens or a mirror. This scan is time-consuming and difficult to conduct because of the lack of direct indicators for a proper focusing.
EP 880 043 discloses a near-field optical microscope based on an optical fiber probe.
DE 102008003291 A1 discloses a near-field optical microscope based on a confocally illuminated tip.
JP2002340771A discloses a near-field optical microscope based on a tip with a small opening.
JP2007003246A discloses a scanning probe microscope including alignment means for aligning the specimen with the probe.

XP55192712 discloses a near-field scanning optical microscope with a metallic probe tip whose image is taken with a CCD camera. Therefore, there is still a need in the art for a method which allows easy, quick and reproducible alignment of the probe or the illuminating light in a device for the near-field optical measurement.
The objective of the invention is therefore to provide an improved device for the near-field optical measurement of a specimen which does not show the above mentioned problems of the prior art. In particular, the objective is to provide a device which allows precise adjustment of the probe or of the illuminating light in an easy, fast and reproducible way.
The present invention relates to a device for the near-field optical measurement of a specimen according to claim 1 comprising a probe comprising a cantilever and a tip, and at least two (far-field) optical imaging systems, whereby the imaging systems are arranged to image the tip from different directions such that the angle γ between the imaging directions is at least about 30°, which imaging is from a direction within the half space defined by a plane parallel to the cantilever and transecting the apex of the tip, and which half space comprises the cantilever. It has been found that the most convenient way of adjustment is by directly observing the tip apex through at least two optical imaging systems, preferably high-magnification optical imaging systems. Such an optical system allows observing and determining with high resolution the precise and correct illumination of the tip of the probe, and optionally also the exact point of contact of the tip of the probe with the specimen.
The devices according to the present invention are devices for the near-field optical measurement of a specimen. This measurement is preferably conducted by scanning (scan-probing) the specimen with the probe while measuring the near-field interaction between the probe and the specimen by detecting the scattering of light focused on to the tip of the scanning probe during scanning.
Probes to be used in the devices according to the present invention are probes comprising a cantilever and a tip, which are known in the art for AFM or for scanning near-field optical microscopy (SNOM). These probes typically comprise a cantilever which carries the tip on one of its ends, the other end of the cantilever is typically mounted onto a larger base to simplify mounting and replacement of the tip. The radius of curvature of the tip is typically below about 100 nm, preferably below about 50 nm, most preferably below about 20 nm. The tips of the cantilevers may be metalized. These probes comprising suitable tips are commercially available, e.g. from NANOSENSORS™ or MikroMasch. The term "parallel to the cantilever" as used herein means parallel to the flat, main (largest) surface of the cantilever. The flat, main (largest) surface of the cantilever typically is the surface of the cantilever opposing the side of the cantilever where the tip is attached. For the case the cantilever does not comprise a flat, main (largest) surface "parallel to the cantilever" means parallel to the main (largest) surface of the base of the probe, to which the cantilever is attached to, and which base is used for fixation of the probe in the probe holder.
The device according to the present invention comprises at least two (far-field) optical imaging systems. The (far-field) optical imaging systems typically comprise a focusing element, e.g. a lens, and a detection unit, typically a CCD based sensor. The detection unit preferably provides an image, preferably in form of electronic signals useful for further processing in a computer. In one embodiment, the focusing lens, i.e. the objective is integrated in the housing of the CCD based sensor in order to provide a most compact optical imaging system. Optionally, the optical imaging system comprises further optical elements for beam steering and focusing. The optical imaging systems are arranged to image the tip, in particular the tip apex, as far as optically possible when being close to or in contact with the specimen. The optical imaging systems image the tip from a direction within the half space defined by a plane parallel to the cantilever, preferably the cantilever surface opposing the tip, and transecting the apex of the tip, and which half space comprises the cantilever. This means that the imaging direction, i.e. the direction of the light reflected or scattered by the tip, which is collected by the optical imaging system, is directed into said half space. This half space is defined by a plane, which is parallel to the cantilever, preferably the cantilever surface opposing the tip, and transects the tip apex of the tip. Further, the half space comprises the cantilever. Thus, all directions starting at the tip apex are separated by said imaginary plane into directions "from above", which is the half space which comprises the cantilever, i.e. where the cantilever is positioned, and into directions "from below". The terms "from above" or "from below" originate from the typical orientation of the cantilever comprising the tip in the device which is such that the specimen is mounted onto the specimen table, and the cantilever with the tip as the lowest part approaches the specimen from above, or, equivalently, the specimen table approaches the tip from below.

The term "optical imaging system" as used herein means the (far-field) optical imaging systems which image the tip under an angle α between close to 0° to lower than 70° and typically include optical imaging systems for purpose of monitoring the probing tip, focusing of the illumination light onto the probing tip and/or monitoring the precise point of contact of the tip. This term does not include "monitoring systems" which monitor the cantilever top surface and/or the large scale (mm range) surface of the specimen typically in an angle α off higher than 70°. The angle α as used herein is the angle of the imaging direction relative to the plane, which plane is parallel to the cantilever and transects the tip apex of the tip. The angle α between the imaging direction and said plane is, as generally understood in geometry, equal to 90° minus the angle between the line corresponding to the imaging direction and the line that goes through the point of intersection and is normal to the plane. "Imaging direction" as used herein is relative to the tip, before being reflected or changed in direction due to optional optical elements.

In one embodiment of the device according to the present application the half space is preferably defined by a plane which plane is parallel to the specimen surface, and which half space comprises the cantilever.

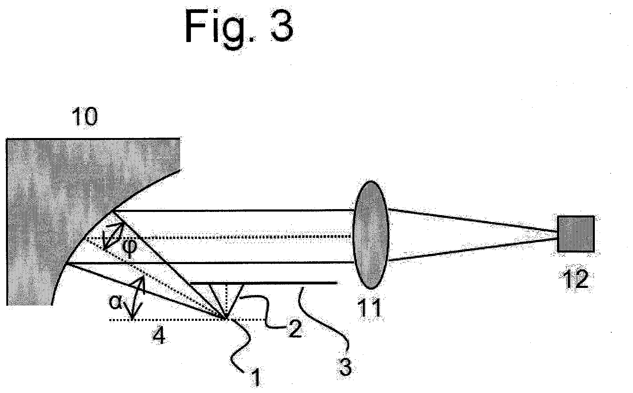

In one preferred embodiment of the device according to the present invention the optical imaging system(s) is (are) arranged to image the tip under an angle α between 10° to 70°, more preferably about 20° to about 60°, in particular about 30° to about 60° and with a numerical aperture of at least 0.1, more preferably with a numerical aperture of at least 0.25, even more preferably with a numerical aperture of at least 0.4. The angle α is as defined above. The numerical aperture (NA) with regard to the optical imaging system is defined by n*sin (ϕ), wherein n = 1 for air, and wherein ϕ is the half-angle of the maximum cone of light detected by the optical imaging system, relative to the tip of the probe (as illustrated in Fig. 3).

The device according to the present invention typically comprises a specimen table or holder as known in the art. This table or holder is preferably able to fix the specimen and to move the specimen in (sub-)nanometer range, e.g. by piezoelectric devices. Alternatively, the specimen is fixed in the device and the holder of the cantilever is able to move the cantilever carrying tip in (sub-)nanometer range.

In one preferred embodiment of the present application, the device further comprises a primary mirror. The primary mirror to be used in the device according to the present invention is a concave mirror. The shape of the concave, reflective area of the mirror is such that the light of independent optical pathways can be focused onto the probe. Therefore the primary mirror is preferably arranged such that the concave side of the mirror faces the probe, and the light of at least two optical pathways can be focused onto the probe, in particular onto the tip. Thus the probe, in particular the tip, is preferably positioned in the focal point of the concave primary mirror.

The term "optical axis" as used herein is as generally understood in the field of optics, and is preferably a direction along which there is some degree of rotational symmetry, i.e. an imaginary line that defines the path which connects the centers of curvatures of the surfaces, i.e. on lenses or concave mirrors.

In a preferred embodiment the primary mirror of the device of the present invention is a parabolic mirror, in particular a parabolic mirror as disclosed in DE 10 2006 002 461 A1 as also described in detail below. By using a parabolic mirror as primary mirror both the disadvantages of conventional concave mirrors, such as those discussed in DE 10 2006 002 461 A1, are overcome, and the location of the near-field probe in the focal point of the mirror and illumination of the probe, in particular the tip, is possible. Further several independent optical pathways which are focused onto the probe can be obtained.

Preferably a parabolic mirror, i.e. a reflector in the shape of a (part of a) paraboloid, is used as primary mirror. More preferably the edge of the parabolic mirror is shaped such that several optical pathways are present which can be directed onto one focal point of the primary mirror. The (reflecting) surface of the primary mirror is preferably partially cut out so that at least two unobstructed optical pathways may be formed which extend through the focal point of the primary mirror. The provision of at least one edge cut-out of the reflector advantageously facilitates the location of a near-field probe at the focal point of the primary mirror, so that, firstly, the optical pathways are not obstructed by the mounting of the near-field probe and secondly operation of the near-field measurement is not restricted by the operation (movement and oscillation) of the near-field probe. A mirror in the form of a paraboloid, the edge of which forms a circular arc in a plane perpendicular to the paraboloid axis, is not absolutely necessary for fault-free focusing along an optical pathway for excitation and observation of scattered light at the near-field detector. In accordance with the invention, even a paraboloid with at least one cut-out, which also provides optical access along an optical pathway for observing the specimen and/or the near-field probe, facilitates effective light collection at the near-field probe. The cut reflector surface facilitates both the focusing of collimated first illuminating radiation on the near-field probe to generate scattered light and the focusing of second illuminating radiation for observation of the specimen and/or the near-field probe.

The shape of the preferred primary mirror used is parabolic, i.e. represents part of a paraboloid. The term "paraboloid", as used herein, defines a geometrical area with an axis (paraboloid axis, corresponds to the optical axis for the parabolic mirror) of which a section parallel to the paraboloid axis produces a (part of a) parabola. A section perpendicular to the paraboloid axis produces a (part of a) circle. The paraboloid is a paraboloid of revolution. The intersection between the paraboloid axis and the paraboloid is called the origin of the paraboloid. The preferred primary mirror in the form of a paraboloid has a first edge which restricts the paraboloid surface in one direction parallel to the paraboloid axis. The first edge is also defined herein as the principal aperture of the paraboloid. The principal aperture typically extends in a plane perpendicular to the paraboloid axis.

If, in accordance with a modified embodiment of the invention, the primary mirror in the form of a paraboloid is provided for an oblique alignment relative to the surface of the specimen, the principal aperture can also extend in a plane which forms an angle with the paraboloid axis which is not equal to 90°.

The primary mirror more preferably has a second edge which is formed by the provision of a cut-out for the optical path used for detection of the deflection of the cantilever. The second edge is also called herein the side aperture of the paraboloid. In general, the side aperture is formed by a section of the paraboloid, the plane of which section does not extend through the apex of the paraboloid and which is not perpendicular to the paraboloid axis. The cut-out is typically formed by a section plane of the paraboloid which extends in parallel to the paraboloid axis at a distance from it. The preferable distance is 1/10th to 2 times the focal length of the primary mirror, more preferable 1/10^{th} to one time the focal length of the primary mirror. The section plane may be inclined in relation to the paraboloid axis, particularly when used with a reflector in an oblique position.

In accordance with a preferred embodiment of the invention, the primary mirror used in the device according to the present invention substantially forms a semi-paraboloid. In this case, the primary mirror has an additional third edge which restricts the paraboloid form in or in the vicinity of a mid-plane of the paraboloid. The third edge is also called "the base aperture" of the paraboloid. The term "semi-paraboloid" means both precise halving, or means a paraboloid which is additionally cut out at the base aperture. The primary mirror can thus advantageously be located relative to a plane surface of a specimen to be examined so that the paraboloid axis extends in parallel to or into the surface of the specimen. In this embodiment of the invention the independent optical pathways are advantageously aligned in parallel to the surface of the specimen. Polarization of the independent optical pathways can be aligned such that light with polarization more or less perpendicular to the surface of the specimen is provided at the near-field probe, which alignment is advantageous due to an increased antenna function of the probe.

Preferably cone angles in relation to the focal point of the primary mirror in the form of a paraboloid are spanned by the edges of the parabolic primary mirror, leaving angular space for the near-field probe and the independent optical pathways, and optionally for the optical pathways for measuring the deflection of the probe, as cantilevered probes are used. In accordance with a preferred embodiment of the device according to the invention, the cone angle δ of the reflector formed in a mid-plane between the second and the third edge is set in a range of about 20° to about 70°, preferably about 50° to about 70°. The inventors have found that thereby a highly-effective illumination of the focal point by the independent optical pathways is possible without cutting the optical pathway too strongly for determination of the deflection of the cantilever.

The first edge of the paraboloid forms the principal aperture with a predetermined cone angle ε. The cone angle ε represents the angle in which the light reaches the focal point on the independent optical pathways. If the cone angle ε is in the preferred range between about 30° to about 240°, more preferable in the range of about 60° to about 240°, the collection of light at the focal point of the primary mirror can be improved advantageously.

A major advantage of the primary mirror as described above is that it allows several operating conditions of near-field microscopy which can be carried out. These comprise easy movement of the specimen in relation to the near-field probe and to the primary mirror, or an easy near-field probe mounting. Further, the primary mirror provides reversible independent optical pathways for reading the scattered light and optical access to the imaging of the tip including the tip apex of the near-field probe and/or reading the deflection of the cantilever. Moreover, by using a concave mirror the light can be polarized such that the field strength contains a strong component along the near-field probe perpendicular to the surface of the specimen, which is a particular advantage due to the antenna function of metallic probe tips in scattering-type scanning near-field microscopy (s-SNOM).

If the primary mirror is provided with an adjustment element, in accordance with a further preferred embodiment of the invention, advantages may emerge for an additional adjustment of the independent optical pathways, in particular in relation to the paraboloid axis of the primary mirror, if the preferred parabolic primary mirror is used. The adjustment element is an optical element with a substantially plane reflector, the surface of which is located perpendicularly to the optical axis of the primary mirror, e.g. the parabolic axis for the case the preferred parabolic mirror is used as primary mirror. A plane mirror or another reflective element with a flat surface may, for example, be used as the adjustment element.

The adjustment element is preferably located at one edge of the primary mirror, to preclude interference with the independent optical pathways or the optical pathway for determination of the deflection of the cantilever. Location on the second edge, i.e. on the periphery of the reflector cut-out, is particularly preferable.

If the illumination intensity at the position of the adjustment element is insufficient for reliable adjustment, the primary mirror of the device according to the present invention can be provided with a deflector element. The deflector element is typically located in the opening of the paraboloid in one or more of the independent optical pathways and diverts part of the illuminating radiation from one or more of the independent optical pathways to the adjustment element. The deflector element is preferably a plane, parallel, transparent plate, e.g. glass. The edge of the primary mirror is advantageously illuminated with the aid of the deflector element.

The primary mirror in the device according to the present invention is preferably arranged in relation to the specimen so that the paraboloid axis of the primary mirror extends parallel to the surface of the specimen. Alternatively, the paraboloid axis may be inclined in relation to the surface of the specimen at a reflector angle which is, for example, set in the range above about 0° to about 60°, preferably about 10° to about 45°, whereby in this case advantages may emerge for the adjustment or setting of a certain polarization of the first illumination beam path in relation to the alignment of the surface of the specimen. In particular, the independent optical pathways can thus be directed across the probe's tip and its mounting, facilitating an even more compact structure. In order to obtain an optimal (high) collection of light by the primary mirror according to this embodiment, the first edge preferably does not extend through a plane perpendicular to the paraboloid axis, but through a plane perpendicular to the surface of the specimen. The angle between the plane spanned by the first edge and a normal on the paraboloid axis corresponds to the reflector angle. In addition, the second edge preferably does not extend through a plane parallel to the paraboloid axis, but parallel to the surface of the specimen. The angle between the plane spanned by the second edge and the paraboloid axis then also corresponds to the reflector angle.

The primary mirror in the device of the present invention may be constructed by several parts, which together form the primary mirror. In this embodiment manufacture of the parts may be simplified, especially for very high cone angles. Preferably the primary mirror is built from one piece in order to avoid disadvantages which may arise due to the junction lines between different parts.

If a primary mirror, which is a concave mirror, is present in the device according to the present application, preferably at least one, more preferably at last two, in particular all of the optical imaging systems(s) is (are) arranged to image the tip via the primary mirror. Preferably, the optical imaging system(s) is (are) focusing the tip of the probe using the reflective, concave surface of the primary mirror in order to detect the image of the tip, i.e. the light emitted from the tip. As the primary mirror covers a significant part of the space around the probe, in particular the tip, preferably all the optical imaging systems image the tip via the primary mirror, in order to allow a most compact device, which still allows imaging the probe, in particular the tip, from many directions.

In one embodiment, the device according to the present invention further comprises an optical monitoring system, which is arranged to monitor the specimen and/or the alignment of deflection detection system of the cantilever. The "optical monitoring systems" can be distinguished from the "optical imaging systems" by the imaging direction as defined above. Such monitoring systems are known in commercially available AFM microscopes and typically comprise an optical detection system or an optical access to be used by eye to the top of the cantilever. These systems typically monitor the cantilever top and/or the specimen in an angle α (the angle α is as defined above) of higher than 70°. The systems are typically used in order to ensure that the laser, which is usually applied for the detection of the deflection of the cantilever, is correctly aligned and focused onto the backside of the cantilever.

The device of the present invention comprises at least two optical imaging systems, which are arranged to image the tip, wherein the optical imaging systems are arranged to image the tip from different directions, such that the angle γ between the imaging directions is at least about 30°, preferably at least about 60°, in particular between 80° and 100°. While it is possible to have an angle γ between the imaging directions of up to 180°, i.e. imaging from opposing directions, it is preferred that the angle γ is less than 180°, more preferably less than 150°. The angle γ is the angle between the two lines which intersect at the tip apex, and which lines follow the centers of the beam paths of the respective optical imaging system from the tip apex to the first mirror or lens in the respective beam paths.

The at least two optical imaging systems can advantageously be used in the device to align the probe, comprising the tip, relative to the optical elements of the device, in particular for illuminating the probe, detection of the reflected or scattered light, and positioning of the probe relative to the specimen. Once the probe is properly aligned relative to the device, this adjustment is only valid for this particular probe. As soon as it is moved, in particular in the cantilever holder, or the probe is replaced, it is typically necessary to redo the focusing. If the new probe comprising the tip can be brought in the same position, relative to the device, as the replaced probe, in particular with a shift of less than about one wavelength of the light used for exciting the near-field interaction, the refocusing can be avoided. Since a single optical imaging system generates only a 2D projection of a 3D object, e.g. the probe comprising the tip, for a full 3D repositioning at least two imaging systems are needed, each imaging the probe from a different angle. Thus, the angle between the two imaging directions should be at least 30°, preferably at least 50° and more preferably in the range between 80° to 100° to achieve at least a partial decoupling of the two orthogonal axes in the 3D space. As the preferably used primary mirror according to the present invention extends to a significant part of the space around the probe, which provides several independent optical paths to the probe, these primary mirrors can advantageously be used in order to provide access for the optical imaging systems to image the tip. This is achieved by installing the at least two optical imaging systems into at least two independent optical pathways, which are preferably directed to the probe at the above defined angle γ.

The term 'optical pathway', or 'optical (beam) path', as used herein is the path that light takes in traversing the optical system. An 'independent optical pathway' as used herein is the optical path which starts at the probe and passes the optical primary mirror and, if present, the secondary mirror, in this order. For the case of illumination of the probe the light follows these independent optical pathways, and passes the mirrors, in reversed order as defined above. The light which is emitted by the probe follows the independent optical pathway and passes the mirrors, i.e. is reflected at the mirrors, or is detected in the optical imaging systems, in the order as defined above.

Thus the term 'independent optical pathway which starts at the probe and passes' one or more mirrors as used herein means the path that light, emitted from the probe, takes, the direction of the path being defined by the direction of the light emitted by the probe. Thus a position 'downwards' on this path means that the light emitted by the probe passes this position later, and a position 'upwards' on this path means that the light emitted by the probe passes this position earlier.

In one preferred embodiment the device according to the present invention further comprises one or more secondary mirrors, preferably two or more, most preferable one per independent optical pathway used. Each one of the optional secondary mirrors is preferably located in an independent optical pathway in the device according to the present invention. Two independent optical pathways are herein termed as 'independent' if these optical paths are not superimposed, preferably the independent optical pathways are not parallel and do not overlap, except at the probe. Thus two independent optical pathways are e.g. two different optical paths for the light to take to the probe, or from the probe, respectively.

In one embodiment of the device of the present invention at least one of the secondary mirrors is arranged such that the distance of the edge of the secondary mirror to the probe is less or equal to about half the focal distance of the primary mirror, preferably equal or less than 1/10 of the focal distance of the primary mirror.

The secondary mirror in the device according to the present invention is the first mirror on each independent optical pathway the light is reflected at after being emitted from the probe and after being reflected at the primary mirror. For the case two or more secondary mirrors are present, these secondary mirrors are preferably arranged such that the parts of different independent optical pathways which are located downwards the secondary mirrors are not parallel to each other. Thus e.g. two optical pathways start at the probe in different orientations, are then reflected at the primary mirror and are, e.g. in the case of a parabolic mirror, then parallel to each other, but not overlapping, and are finally reflected at two different secondary mirrors into two different orientations, thus they are not parallel any more. The term parallel as used herein means "parallel and the same direction", which correspond to an angle close to 0°. Parallel pathways with opposing direction are antiparallel, what means angle close to 180°. More preferably the parts of different independent optical pathways which are located downwards the secondary mirrors, form an angle of about 20° to about 180°, preferably about 90° to about 180°, in particular about 100° to about 160°, such as about 120°. This angle is defined as the angle between the two corresponding straight lines which run in the center of two parts of different independent optical pathways which are located downwards the secondary mirrors. The straight lines have the direction downwards the optical pathway. For the case that these straight lines intersect, the angle is the angle between the two straight lines in downward direction of the pathways; for the case that these straight lines are skew, the angle is the corresponding angle between two intersecting auxiliary straight lines which are parallel to the straight lines running in the center of the parts of different independent optical pathways which are located downwards the secondary mirrors. The optical (beam) pathway is defined as the collection of (all) rays that are scattered starting from the probe and reflected first by the primary and then by the same secondary mirror, respectively, thus by each secondary mirror present in the device an independent optical pathway is formed.

In one preferred embodiment two independent optical pathways are reflected on the primary mirror at different areas of the primary mirror, i.e. the part of the reflective area on the primary mirror used to reflect one independent optical pathway is not used to reflect any other independent optical pathway. More preferably two independent optical pathways do not overlap except at the probe, i.e. the independent optical pathways do not intersect, except at the probe. Intersection of the independent optical pathways at the probe is necessary, as all independent optical pathways are focused onto the probe via the primary mirror.

In a preferred embodiment of the device according to the present invention at least one of the secondary mirrors is a substantially planar mirror, more preferably all secondary mirrors are substantially planar mirrors.

In a further preferred embodiment of the device according to the present invention the primary mirror is a parabolic mirror, e.g. the parabolic mirror as described above, more preferably the primary mirror is a parabolic mirror, e.g. the parabolic mirror as described above, and all secondary mirrors are planar mirrors. A particularly preferred parabolic mirror to be used as primary mirror is the mirror as disclosed in DE 10 2006 002 461 A1.

By the combination in the device of the invention of one primary mirror, which is preferably parabolic, and at least two secondary mirrors, which reflect the optical pathways into two different directions, at least two independent optical pathways are provided. These independent optical pathways can advantageously be used to simultaneously illuminate the probe and to image the probe, in particular the tip, by the optical imaging system(s). Optionally a further independent optical pathway can be used to collect the light emitted by the probe without being disturbed by illuminating light. Further this combination in the device of the invention of one primary mirror, which is preferably parabolic, and at least two secondary mirrors as described above thus enables the focusing of at least two independent optical pathways on the probe, while at the same time it is still possible to image the probe, in particular relative to the specimen. Independently the deflection of the probe can be detected, although the space around the probe is rather crowded. If further at least one of the secondary mirrors is arranged such that the distance of the edge of the secondary mirror to the probe is less or equal to about half the focal distance of the primary mirror, an additionally advantageous collection of the light emitted by the probe is possible, as also the light reflected on the primary mirror close to its apex can be reflected by the secondary mirror. Otherwise this light would hit the probe or the holder of the probe and could not be used for detection.

Additionally the use of one single primary mirror ensures that a large angular space, i.e. nearly half the space around the probe is available for focusing on the probe. In optics, the numerical aperture (NA) of an optical system is a dimensionless number that characterizes the range of angles over which the system can accept or emit light. NA is defined by n*sin (θ), wherein θ is the half-angle of the maximum cone of light that can enter or exit the lens. Thus a corresponding NA can be determined, wherein n=1 for air, which corresponds to the sin (θ), wherein θ is the half-angle of the maximum cone of light spanned by the primary mirror. Preferably the primary mirror of the device of the present invention has a numerical aperture NA in the range of about 0.2 to about 1, most preferably at least 0.5 up to about 1. These high numerical apertures can only be achieved due to the usage of one primary mirror, combined with the secondary mirror(s) to provide independent optical pathway(s). Thereby it is ensured that as much of light as possible emitted by the probe into the angular space spanned by the primary mirror is collected and detected, although there is limited space around the probe. The means for providing an adjustment beam as described and positioned above ensure that the optical elements of the device according to the present invention can be precisely aligned without the necessity of wasting space around the probe or hindering the accessibility of the probe by several different illumination beam paths.

The secondary mirrors are preferably rather close to the probe and to the primary mirror. Preferable the distance of the centre of the reflective area of the secondary mirrors to the focal point of the primary mirror is less than about four times the focal distance of the primary mirror, more preferably less than about two time the focal distance of the primary mirror. This is to ensure that at least two independent optical pathways are available for the illumination of the probe and/or determination of the light emitted by the probe, which both have a high numerical aperture as defined above. Preferably in this embodiment of the device according to the present invention at least one of the secondary mirrors is arranged such that the distance of the edge of the secondary mirror, preferably the edge of the reflective area of the secondary mirror, to the probe is less or equal to about half the focal distance of the primary mirror, preferably equal or less than 1/10 of the focal distance of the primary mirror.

In a preferred embodiment of the present invention the probe or the probe holder is located, i.e. mounted, substantial between two of the secondary mirrors in the device of the invention. More preferable the secondary mirrors, most preferable, two of them, are arranged substantially symmetrically around the probe, preferable in the plane parallel to the specimen. Preferably in this embodiment of the device according to the present invention at least one of the secondary mirrors, most preferably both secondary mirrors, is (are) arranged such that the distance of the edge of the secondary mirror(s) to the probe is less or equal to about half the focal distance of the primary mirror, preferably equal or less than 1/10 of the focal distance of the primary mirror. This arrangement ensures excellent stability of the optical pathways in respect to adjustability and vibrations, while keeping the optical pathways short and the numerical apertures as high as possible.

In a particularly preferred embodiment the device according to the present invention contains two secondary mirrors, and therefore also two independent optical pathways as defined above.

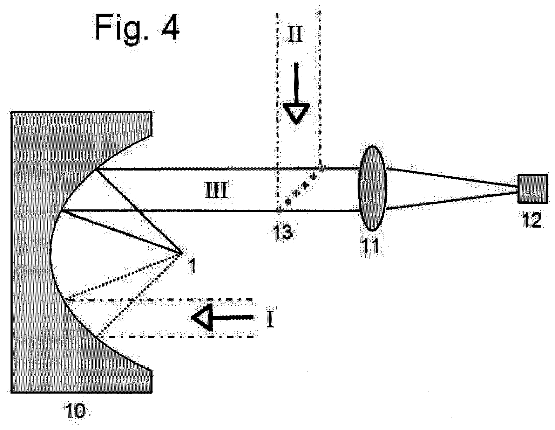

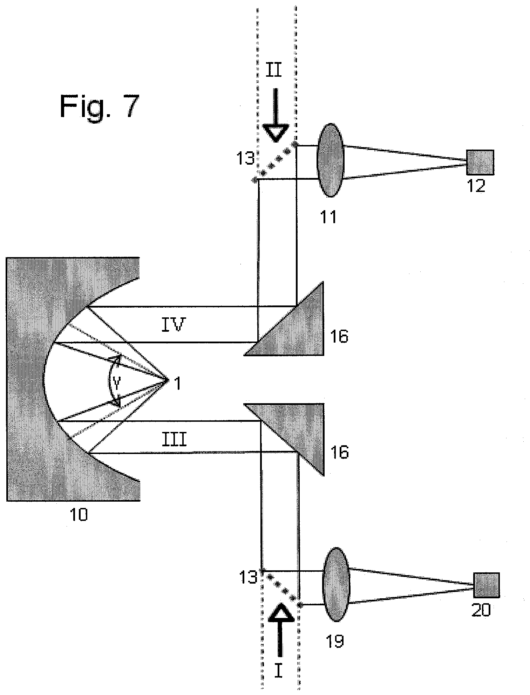

In one embodiment of the device according to the present invention in at least one, preferably two, independent optical pathways as defined above means for splitting or dividing an optical pathway, such as a beam splitter or flip-mirror, are installed. In this embodiment one independent optical pathway can be used for both illumination of the probing tip, optionally combined with detection of scattered light, and as optical access to the tip of the probe for the optical imaging system. Such an embodiment is illustrated in Fig. 4. Preferably the means for splitting or dividing an optical pathway, such as beam splitters or flip-mirrors are installed in two or more independent optical pathways (illustrated in Fig. 7). Preferably means for splitting or dividing an optical pathway, such as beam splitters or flip-mirrors are used in combination with secondary mirrors. Flip-mirrors have the advantage that they work in every spectral range of light applied, beam splitters are typically restricted in this sense.

The invention further relates to a method for scanning the optical near field of a specimen according to claim 10, wherein the device as described above is used.

Further, the present invention relates to a method for adjusting a probe according to claim 11, comprising a cantilever comprising a tip, in a device for the near field optical measurement of a specimen as described above. The method comprises applying at least two optical imaging systems, which are preferably arranged as described above, in particular with angle γ between the imaging directions as described above. If the angle γ is close to 90°, which is preferred, a movement that appears perpendicular to the focal plane on one optical imaging system will appear as lateral movement on the second optical imaging system and vice versa. Thereby, optionally assisted by storing means of the imaging system to provide a "ghost image" to compare the position of the replaced tip with the position of the new tip, a precise repositioning of the new tip at the position of the replaced tip with only (sub-) micrometer deviation can be achieved. Preferred, the method includes application of a mirror specimen, i.e. a specimen reflecting the light used for illuminating the tip. When such a mirror specimen is approached to the tip during alignment, the images acquired by the optical imaging system(s) contain the additional view of the tip via the mirror specimen. Thereby a more precise alignment of the illumination of the tip as close to the tip apex as possible can be achieved.

Further, the present invention relates to a method for aligning the illumination of a probe according to claim 12, in particular the illuminating light beam focused onto a probe, in a device as described above. This method comprises applying at least two optical imaging systems, which are preferably arranged as described above. Preferred, the method includes application of a mirror specimen. For the alignment, preferably a mirror specimen can be placed close to the tip of the probe. In particular for the case that the half cone angle β of the tip is similar to the angle α, which angle α is defined as above, the mirror image of the tip comprises an image of the tip apex. As the tip apex is also illuminated via the mirror specimen, image formation of the tip is improved. This can be used for a more precise alignment of tip illumination.

The invention relates further to the use of a device a described above for scanning the optical near-field of a specimen according to claim 13.

The device of the present invention is preferably provided with at least one illuminating device by means of which the probe is illuminated in order to enable or improve the imaging via the at least one optical imaging system. Preferably for each optical imaging system an illuminating device is present in order to provide sufficient illumination of the probe in the direction of the respective optical imaging system. Sufficient illumination of the probe is typically necessary in order to achieve precise imaging of the probe via the optical imaging system for alignment of the probe and/or the alignment of the focused light for the near-field measurement. The illuminating device may be any suitable light source, e.g. a LED (light emitting diode). The illuminating device preferably provides illumination of the probe from an angle such that the light is specularly reflected from the cantilever surface into the respective optical imaging system. Most preferably the illuminating device is attached to or integrated into the cantilever holder or the probing head, i.e. the unit comprising cantilever holder and optional piezo electing elements as well as the supporting structure.
The device of the present invention is typically provided with at least one light source device to provide focused light, which light is scattered at tip of the probe in order to conduct the near-field measurement. Preferably this illumination of the tip of the probe is via the primary mirror, preferably via one of the independent optical pathways. The mirror optic, i.e. all the mirrors used comprising the primary mirror and the secondary mirrors, and the light source device are preferably fixable in relation to each other so that where the system once has been adjusted, no further adjustments during an optical near-field measurement are necessary. The light source device can advantageously produce illuminating beams of several different wavelengths for measurements with spectral resolution. For this purpose, several laser sources with different emission wavelengths may be provided in the light source device. This may become necessary if illumination is intended using light of more different wavelengths than independent optical pathways are available. The illuminating beams of the different wavelengths produced by the light source device can then be focused on the near-field probe at the focal point of the primary mirror on one of the independent optical pathways.

The term "illuminating beam" as used herein refers to the light provided by the light source (light source device) to provide focused light which is scattered at the tip of the probe in order to conduct the near-field measurement. This term is not used with regard to the illumination of the cantilever by the "illuminating device" for imaging via the optical imaging systems.

The device according to the present invention is preferably also provided with a detector by which the light scattered by the near-field probe can be detected. The mirror optic used according to the invention advantageously detects a large spatial angle to collect the light scattered at the near-field probe, which leads to high collection efficiency and an improved signal-to-noise ratio. The spatial angle covered by the primary mirror corresponds to a large cross-section of optionally parallel beams on the independent optical pathways. As the parallel beams on each independent optical pathway are typically not compact but deformed in the form of a rectangle or elongated, a division of the parallel beam into two or more beams on each independent optical pathway extending adjacently may be provided. Several beams may thus be advantageously directed on to the near-field probe in this way or the light scattered back may thus be detected with spatial resolution.

The figures illustrate further details and advantages of the invention.
Fig. 1 is a diagrammatic side view of the cantilever comprising the tip, the primary mirror, an optical imaging system and an optical monitoring system.
Fig. 2 is diagrammatic top view indicating two independent optical pathways I and II.
Fig. 3 is a diagrammatic side view indicating the probe, the primary mirror and one optical imaging system.
Fig. 4 is diagrammatic top view indicating two independent optical paths (I and III) via the primary mirror, wherein one optical path III is separated by a beam splitter into a path for one optical imaging system and an illumination beam path II.
Fig. 5 is a diagrammatic top view indicating the primary mirror, two secondary mirrors and a beam splitter, which are used to provide two independent illumination beam paths and one beam path for the optical imaging system.
Fig. 6 is a diagrammatic side view indicating a primary mirror, probe, a mirror sample and an optical imaging system.
Fig. 7 is a diagrammatic top view indicating the primary mirror, two secondary mirrors and a beam splitter, which are used to provide two independent illumination beam paths and two beam paths for two optical imaging systems.

The invention is further illustrated by the detailed description of the figures:

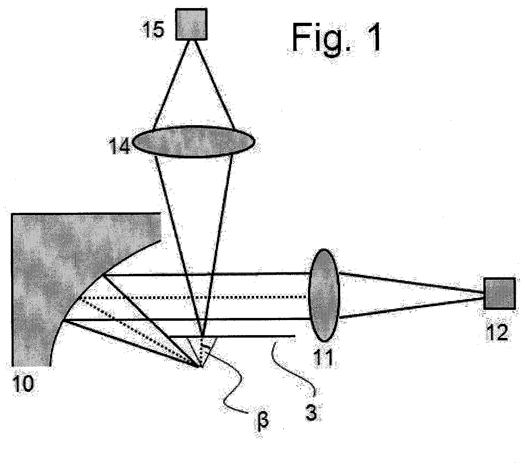

Fig. 1 illustrates a device comprising a primary mirror 10, which is used to image the tip 2 mounted onto cantilever 3 by an optical imaging system comprising a focusing element (lens) 11 and a camera 12. The angle β of the tip (half the cone angle of the tip) depends on the probe manufacturer, and is typically about 10° to about 60°. Further illustrated is a system for optical monitoring the top of the cantilever 3, comprising a focusing element (lens) 14 and a camera 15 for the detection of the deflection laser on the cantilever 3.

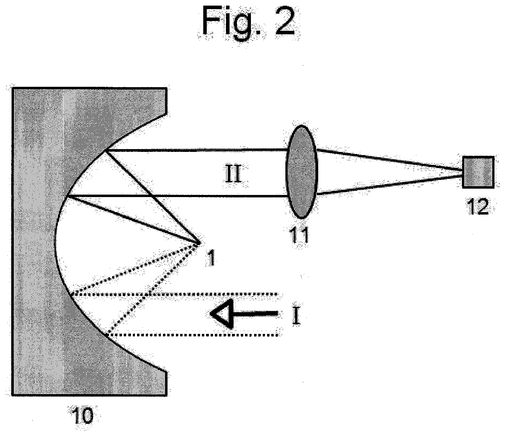

Fig. 2 illustrates a device, wherein the primary mirror 10 is used to provide both an illumination beam path I for illuminating the tip apex 1 (tip and cantilever not shown) and an independent optical beam path II for the optical imaging system comprising a focusing element (lens) 11 and a camera 12.
Fig. 3 illustrates a device, comprising the cantilever 3 comprising the tip 2 with the tip apex 1. The optical imaging system comprising a focusing element (lens) 11 and a camera 12 images the tip apex 1 via the primary mirror 10. The optical imaging system is arranged to image the tip apex 1 in an angle α relative to the plane 4, which plane 4 is parallel to the cantilever 3 and transects the tip apex 1. ϕ is the half cone angle of the light detected by the optical imaging system.
Fig. 4 illustrates a device based on the set-up shown in Fig. 2, wherein additionally in beam path III a beam splitter or flip-mirror 13 is present. The beam splitter or flip-mirror 13 is used to enable access of a second illumination beam II and at the same time of an optical imaging system comprising a focusing element (lens) 11 and a camera 12. This is in order to share an independent beam path III to both illuminate and image the tip apex 1 (tip 2 and cantilever 3 not shown) at the same time via primary mirror 10. The tip apex 1 can at the same time be illuminated via beam path I.

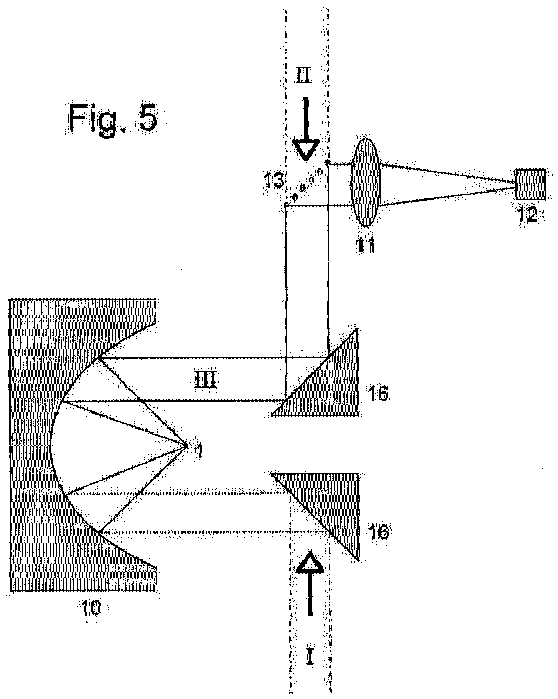

Fig. 5 illustrates a preferred embodiment of the device according to the present invention based on the set-up shown in Fig. 4, wherein additionally two secondary mirrors 16 are installed. These secondary mirrors 16 can be mounted close to the cantilever, the tip (cantilever 3 and tip 2 not shown) and the tip apex 1, in order to maximize the optical accessibility of the tip apex.

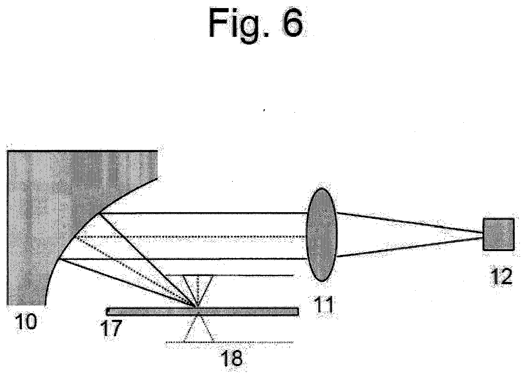

Fig. 6 illustrates an arrangement similar to that shown in Fig. 3. A mirror specimen 17 is approached in close proximity to the tip apex in order to optimize the positioning and illumination of the tip, as the mirrored image 18 (as showing up when looked from above the mirror specimen) of the cantilever and the tip is additionally imaged via the optical imaging system comprising a focusing element (lens) 11 and a camera 12.
In Fig. 7 the same arrangement as shown in Fig. 5 is illustrated, wherein in both independent optical pathways reflected by the two respective secondary mirrors 16 a beam splitter 13 is installed. In this particularly preferred embodiment, two illuminating beam paths I and II are available to illuminate the tip and its tip apex 1 (cantilever 3 and tip 2 not shown). At the same time, two independent imaging systems comprising a focusing element (lens) (11 and 19, respectively) and a camera (12 and 20, respectively) can be used to image the tip apex 1 via the primary mirror 10. The angle γ between the imaging direction is preferably 80° to 100°, more preferably about 90°. This set-up shown in Fig. 7 provides both access via two independent illumination beam paths and provides two images from the tip at the same time taken from different directions. One imaging system and one illumination beam share one independent optical pathway III and IV, respectively, in order to access the tip apex. If the tip is replaced in this set-up, and the new tip is installed, it only has to be ensured that the new tip is aligned such that the image of the tip taken via the optical imaging systems overlaps with the images taken from the former tip. This can be achieved by electronic means which are able to store the image and allow comparison of the stored image of the replaced tip with the image of the new tip. As the optical imaging systems provide images of the tip from different directions the new tip can easily be aligned in 3D space by comparison of the image of the new tip with the images of the replaced tip. Thereby, a fast and easy adjustment of the tip in the system can be achieved, without the necessity of re-alignment of all optical elements to the new probe.

## Claims

1. Device for the near-field optical measurement of a specimen comprising a probe comprising a cantilever (3) and a tip (2), and at least two optical imaging systems, wherein the optical imaging systems are arranged to image the tip (2) from different directions such that the angle γ between the imaging directions is at least about 30°, which imaging is from a direction within the half space defined by a plane parallel to the cantilever (3) and transecting the tip apex (1) of the tip (2), and which half space comprises the cantilever (3).

2. Device according to claim 1, which device further comprises a primary mirror (10), which is a concave mirror, wherein at least one, preferably all, the optical imaging systems are arranged to image the tip (2) via the primary mirror (10).

3. Device according to any one of the preceding claims, wherein the optical imaging systems are arranged to image the tip (2) under an angle α between 10° to 70° and with a numerical aperture of at least 0.1, wherein the angle α is measured relative to the plane parallel to the cantilever (3) and transecting the apex (1) of the tip (2).

4. Device according to any one of the preceding claims, which further comprises an optical monitoring system, which is arranged to monitor the specimen and/or the alignment of the deflection detection system of the cantilever (3).

5. Device according to claim 1, wherein the two optical imaging systems to image the tip (2) are arranged to image the tip from different directions such that the angle γ between the imaging directions is about 80° to about 100°.

6. Device according to one of the claims 1 or 5, which comprises a primary mirror (10) and further comprises at least two secondary mirrors (16), wherein each one of the secondary mirrors (16) is located in an independent optical pathway, whereby each one of the independent optical pathways starts at the probe and passes the primary mirror (10) and the secondary mirror (16), whereby each one of the secondary mirrors (16) is the first mirror located in the respective independent optical pathway downwards the primary mirror (10), and at least one optical imaging system images the tip via each independent optical pathway.

7. Device according to claim 6, wherein the secondary mirrors (16) are arranged such that the paths of different independent optical pathways which are located downwards the secondary mirrors (16) are not parallel to each other, whereby the independent optical pathways start at the probe and pass the primary mirror (10) and the respective secondary mirror (16).

8. Device according to any one of claims 6 or 7, wherein the secondary mirrors (16) are planar mirrors.

9. Device according to any one of claims 2 to 8, wherein the primary mirror (10) is a parabolic mirror.

10. Method for scanning the optical near-field of a specimen, wherein a device according to any one of the claims 1 to 9 is used.

11. Method for adjusting a probe in a device for the near-field optical measurement of a specimen according to any one of the claims 1 to 9, comprising applying at least two optical imaging systems, which are arranged to image the tip.

12. Method for aligning the illuminating beam path to illuminate a probe in a device for the near-field optical measurement of a specimen according to any one of the claims 1 to 9, comprising applying at least two optical imaging systems, which are arranged to image the tip.

13. Use of a device according to any one of the claims 1 to 9 for scanning the optical near-field of a specimen.

## Patentansprüche

1. Vorrichtung für eine optische Nahfeldmessung einer Probe, aufweisend eine Sonde, die einen Cantilever (3) und eine Spitze (2), sowie mindestens zwei Systeme zur optischen Bildgebung aufweist, wobei die Systeme zur optischen Bildgebung angeordnet sind, um eine Bildgebung der Spitze (2) aus unterschiedlichen Richtungen durchzuführen, derart, dass der Winkel γ zwischen den Bildgebungsrichtungen mindestens ca. 30° beträgt, wobei die Bildgebung aus einer Richtung innerhalb des Halbraums erfolgt, der durch eine Ebene parallel zum Cantilever (3) begrenzt wird und den Scheitelpunkt (1) der Spitze (2) schneidet, und der Halbraum den Cantilever (3) beinhaltet.

2. Vorrichtung nach Anspruch 1, wobei die Vorrichtung weiter einen Primärspiegel (10) aufweist, bei dem es sich um einen Konkavspiegel handelt, wobei mindestens eines, vorzugsweise alle, der optischen Bildgebungssysteme angeordnet sind, um eine Bildgebung der Spitze (2) über den Primärspiegel (10) durchzuführen.

3. Vorrichtung nach einem der vorhergehenden Ansprüche, wobei die optischen Bildgebungssysteme angeordnet sind, um eine Bildgebung der Spitze (2) unter einem Winkel α zwischen 10° bis 70° und einer numerischen Apertur von mindestens 0,1 durchzuführen, wobei der Winkel α relativ zu der Ebene gemessen wird, die zu dem Cantilever (3) parallel ist und den Scheitelpunkt (1) der Spitze (2) schneidet.

4. Vorrichtung nach einem der vorhergehenden Ansprüche, weiter aufweisend ein optisches Überwachungssystem, das angeordnet ist, um eine Überwachung der Probe und/oder der Ausrichtung des Auslenk-Detektionssystems des Cantilever (3) durchzuführen.

5. Vorrichtung nach Anspruch 1, wobei die zwei optischen Bildgebungssysteme zur Durchführung der Bildgebung der Spitze (2) angeordnet sind, um eine Bildgebung der Spitze aus unterschiedlichen Richtungen durchzuführen, derart, dass der Winkel γ zwischen den Bildgebungsrichtungen ca. 80° bis ca. 100° beträgt.

6. Vorrichtung nach einem Ansprüche 1 bis 5, die einen Primärspiegel (10) aufweist und weiter mindestens zwei Sekundärspiegel (16) aufweist, wobei jeder der Sekundärspiegel (16) sich in einem unabhängigen Strahlengang befindet, wobei jeder der unabhängigen Strahlengänge an der Sonde beginnt und über den Primärspiegel (10) und dem Sekundärspiegel (16) verläuft, wobei es sich beim Sekundärspiegel (16) jeweils um den ersten Spiegel handelt, der sich in dem jeweiligen unabhängigen Strahlengang hinter dem Primärspiegel (10) befindet, und mindestens ein optisches Bildgebungssystem eine Bildgebung der Spitze über einen jeweiligen unabhängigen Strahlengang durchführt.

7. Vorrichtung nach Anspruch 6, wobei die Sekundärspiegel (16) derart angeordnet sind, dass die Strahlengänge unterschiedlicher unabhängiger Strahlengänge, die sich im Strahlengang hinter dem Sekundärspiegel (16) befinden, nicht zueinander parallel sind, wobei die unabhängigen Strahlengänge an der Sonde beginnen und über den Primärspiegel (10) und den jeweiligen Sekundärspiegel (16) verlaufen.

8. Vorrichtung nach einem der Ansprüche 6 oder 7, wobei die Sekundärspiegel (16) Planspiegel sind.

9. Vorrichtung nach einem der Ansprüche 2 bis 8, wobei der Primärspiegel (10) ein Parabolspiegel ist.

10. Verfahren zur Abtastung des optischen Nahfeldes einer Probe, wobei eine Vorrichtung nach einem der Ansprüche 1 bis 9 verwendet wird.

11. Verfahren zur Abstimmung einer Sonde in einer Vorrichtung für die optische Nahfeldmessung einer Probe nach einem der Ansprüche 1 bis 9, das beinhaltet, dass mindestens zwei optische Bildgebungssysteme angewendet werden, die angeordnet sind, um eine Bildgebung der Spitze durchzuführen.

12. Verfahren zur Ausrichtung des Beleuchtungsstrahlengangs zur Beleuchtung einer Sonde in einer Vorrichtung für die optische Nahfeldmessung einer Probe nach einem der Ansprüche 1 bis 9, das beinhaltet, dass mindestens zwei optische Bildgebungssysteme angewendet werden, die angeordnet sind, um eine Bildgebung der Spitze durchzuführen.

13. Verwendung einer Vorrichtung nach einem der Ansprüche 1 bis 9 für ein Abtasten des optischen Nahfeldes einer Probe.

## Revendications

1. Dispositif pour la mesure optique de champ proche d'un échantillon, comprenant une sonde comprenant un bras (3) et une pointe (2), et au moins deux systèmes d'imagerie optique, les systèmes d'imagerie optique étant conçus pour représenter une image de la pointe (2) à partir de directions différentes de telle sorte que l'angle γ entre les directions de représentation d'image soit d'au moins environ 30°, la représentation d'image étant faite à partir d'une direction à l'intérieur de la moitié d'espace définie par un plan qui est parallèle au bras (3) et qui coupe le sommet (1) de la pointe (2), et ladite moitié d'espace comprenant le bras (3).

2. Dispositif selon la revendication 1, le dispositif comprenant également un miroir primaire (10) qui est un miroir concave, au moins un et de préférence tous les systèmes d'image optique étant conçus pour représenter une image de la pointe (2) par l'intermédiaire du miroir primaire (10).

3. Dispositif selon l'une quelconque des revendications précédentes, dans lequel les systèmes d'imagerie optique sont conçus pour représenter une image de la pointe (2) sous un angle α situé entre 10° et 70° et avec une ouverture numérique d'au moins 0,1, l'angle α étant mesuré par rapport au plan qui est parallèle au bras(3) et qui coupe le sommet (1) de la pointe (2).

4. Dispositif selon l'une quelconque des revendications précédentes, qui comprend également un système de surveillance optique qui est conçu pour surveiller l'échantillon et/ou l'alignement du système de détection de déviation du bras (3).

5. Dispositif selon la revendication 1, dans lequel les deux systèmes d'imagerie optique pour représenter une image de la pointe (2) sont conçus pour représenter une image de la pointe à partir de directions différentes de telle sorte que l'angle γ entre les directions de représentation d'image soit situé entre 80° et environ 100°.

6. Dispositif selon l'une quelconque des revendications 1 à 5, qui comprend un miroir (10) et qui comprend également au moins deux miroirs secondaires (16), chacun des miroirs secondaires (16) étant situé sur un trajet optique indépendant, chacun des trajets optiques indépendants commençant au niveau de l'échantillon et passant par le miroir primaire (10) et le miroir secondaire (16), chacun des miroirs secondaires (16) étant le premier miroir situé sur le trajet optique indépendant respectif en aval du miroir primaire (10), et au moins un système d'imagerie optique représentant une image de la pointe par l'intermédiaire de chaque trajet optique indépendant.

7. Dispositif selon la revendication 6, dans lequel les miroirs secondaires (16) sont conçus de telle sorte que les trajectoires des différents trajets optiques indépendants qui sont situées en aval des miroirs secondaires (16) ne soient pas parallèles, les trajets optiques indépendants commençant au niveau de l'échantillon et passant par le miroir primaire (10) et le miroir secondaire respectif (16).

8. Dispositif selon l'une quelconque des revendications 6 ou 7, dans lequel les miroirs secondaires (16) sont des miroirs plans.

9. Dispositif selon l'une quelconque des revendications 2 à 8, dans lequel le miroir primaire (10) est un miroir parabolique.

10. Procédé pour le balayage du champ proche optique d'un échantillon, selon lequel un dispositif selon l'une quelconque des revendications 1 à 9 est utilisé.

11. Procédé pour le réglage d'un échantillon dans un dispositif pour la mesure optique de champ proche d'un échantillon selon l'une quelconque des revendications 1 à 9, comprenant l'application d'au moins deux systèmes d'imagerie optique qui sont conçus pour représenter une image de la pointe.

12. Procédé pour l'alignement de la trajectoire de faisceau d'éclairage pour éclairer une sonde dans un dispositif pour la mesure optique de champ proche d'un échantillon selon l'une quelconque des revendications 1 à 9, comprenant l'application d'au moins deux systèmes d'imagerie optique qui sont conçus pour représenter une image de la pointe.

13. Utilisation d'un dispositif selon l'une quelconque des revendications 1 à 9 pour le balayage du champ proche optique d'un échantillon.
